# EUROPEAN PATENT SPECIFICATION

(11) **EP 2 488 340 B1**
(45) Date of publication and mention of the grant of the patent: **14.11.2012**
(21) Application number: 10776428.4
(22) Date of filing: 05.10.2010
(51) Int. Cl.: B29K 705/00, B29L 31/34, B29K 705/02, B29K 705/10, B29B 17/02

(54) **.A COMPACT MACHINE FOR DIFFERENTIATED RECUPERATION OF INDUSTRIAL SCRAP**
KOMPAKTE MASCHINE FÜR DIFFERENZIERTE RÜCKGEWINNUNG VON INDUSTRIEABFÄLLEN
MACHINE COMPACTE POUR LA RÉCUPÉRATION DIFFÉRENCIÉE DE DÉCHETS INDUSTRIELS

(30) Priority: 15.10.2009 IT BO20090671
(43) Date of publication of application: 22.08.2012
(73) Proprietor: MG Recycling S.r.L., 44012 Bondeno (Ferrara) (IT)
(72) Inventor: BLO, Guido, I-44012 Bondeno (Ferrara) (IT)
(74) Representative: Dall'Olio, Christian
(86) International application number: PCT/IB2010/054489
(87) International publication number: WO 2011/045707

(56) References cited:
- EP-A2- 1 321 191
- GB-A- 2 146 272
- JP-A- 54 156 187
- US-A- 4 362 276
- US-A- 4 940 187

## Description

### TECHNICAL FIELD

The present invention relates to the technical field concerning machines for differentiated recuperation of industrial scrap.

### BACKGROUND ART

These machines, in general terms, enable separation of two or more materials having different specific weights from one another, such as for example copper/plastic or copper/aluminium/plastic. A machine of this kind is described in US-A-4940187.

The greatest interest however relates to the differentiated recuperation of electric cables deriving from production leftovers, scrap, demolition etc., with particular reference to the separation of the copper from the plastic insulation cladding it.

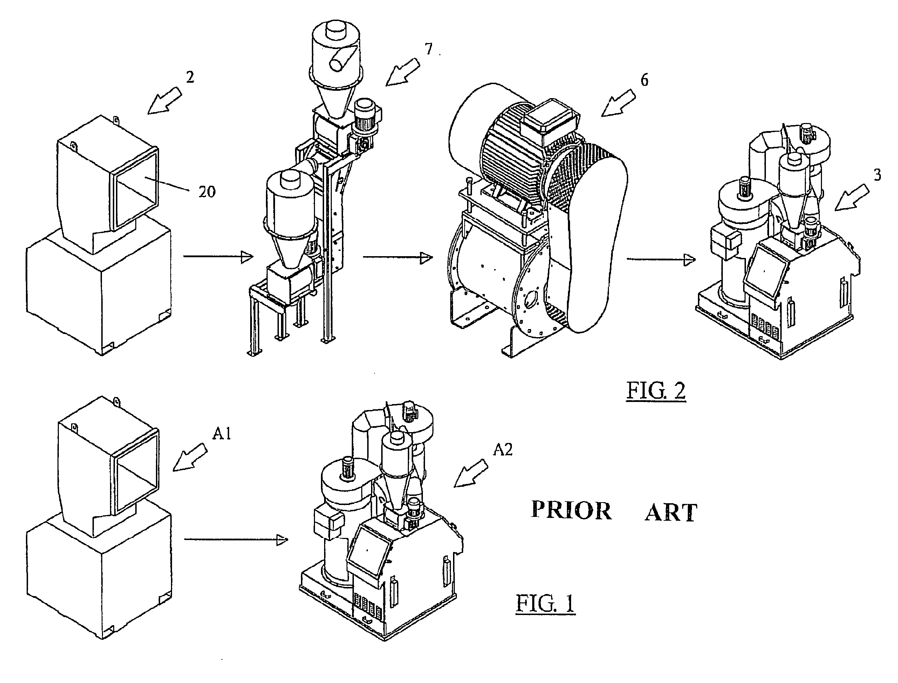

Compact machines of known type for this purpose comprise a blade grinder A1 to which the separator group A2 is directly connected in cascade (see figure 1).

The grinder A1 and the separator A2 are positioned on a common rest base and often cooperate with special filters (not illustrated) destined to collect the powders produced during the separation stage in order to prevent propagation thereof into the environment.

The blade grinder A1 fundamentally enables grinding lengths of electric cable which are inserted at the loading mouth either manually or by means of a loading belt supplied by a mincer located upstream.

In both cases the lengths of cable are first prepared such as to exhibit a predetermined workpiece size.

The granulometry of the product exiting from the blade grinder A1 is a function of the number of revolutions of the blades and the size of the grill holes; clearly an increase in homogeneity of the product corresponds to a better performance of the separator A2 and thus the recycled product.

An important fact is that an excessive rotation speed of the blades in the grinder A1 can cause an increase in the temperatures in play, with the risk of softening if not actual fusing of the plastic cladding sheath; this eventuality leads to the formation of lumps of copper and plastic together, which in a short time can clog the holes of the grid of the grinder A1.

Generally, however, the product exiting the blade grinder A1 exhibits a needle-shaped geometry of the copper, which neither facilitates nor simplifies the plastic separation stage.

The product exiting the grinder A1 is conveyed pneumatically to the separator group A2 where it is directed onto an inclined separating table and activated with a jolting motion generated by counter-rotating vibrator organs.

The upper surface of the separating table exhibits a bossed mesh with very fine links, which during the working process is invested from below by an air flow of predetermined flow rate.

The combined action of the air flow and the vibrations to which the table is subjected cause the copper to rise (heavier), and the plastic to float (lighter) on the copper. While the copper tends to raise on the bossed mesh, the plastic is directed in an opposite direction and floats on the copper.

The greatest drawbacks of this type of known process for a compact machine are fundamentally represented by the undesired needle-shaped geometry in inlet into the separator group A2.

This geometry causes the formation of lumps of material on the separator table which compromise the separation quality and in certain cases gravely obstruct the bossed mesh.

In order to obviate the drawback, especially in relation to thin needle-shaped cables, grids are used inside grinders having small holes - which, however, leads to a drop in productivity.

The needle shape of the copper on outlet from the grinder A1 facilitates the formation of localised masses of material which over time grow and slow down the rising path of the copper on the table, and therefore the whole separating process. There is also a considerable effect on the quality of the final product, as the copper is unloaded with the plastic.

This means a busy maintenance regime for cleaning the table, with consequent non-productive halting as well as a modification of the machine settings.

### SUMMARY OF INVENTION

The aim of the present invention is to provide a compact machine for differentiated recuperation of industrial scrap, in particular comprising metal/plastic, able to guarantee a high separation efficiency and a maximum quality of the final product to be recuperated.

A further aim is to provide a compact machine able to significantly limit the stages of maintenance and the corresponding machine downtimes, to the full advantage of the overall productivity.

The above-indicated aims are obtained in accordance with the contents of the claims.

### BRIEF DESCRIPTION OF THE DRAWINGS

The characteristics of the invention will emerge in the following, in which some preferred but not exclusive embodiments will be described, with reference to the accompanying figures of the drawings, in which:
figure 1 schematically illustrates a compact machine according to the prior art in an exploded configuration;
figure 2 illustrates a like diagram in an exploded configuration of the compact machine of the invention;
figure 3 is a functioning diagram of the compact machine denotes in figure 2;
figure 4 is a larger-scale illustration of a partially-sectioned view of a particularly significant component of the machine illustrated in figure 2;
figure 5 is an enlarged detail of a section view in a vertical plane of a further significant component of the machine;
figures 6A, 6B, 6C, 6D illustrate perspective views in plan view, front view and side view, of the machine of the invention in a particular form of assembly.

### BEST MODE FOR CARRYING OUT THE INVENTION

With reference to the above tables of figures, 1 is used to denote in its entirety the compact machine for differentiated recuperation of industrial scrap, especially indicted for the differentiated recuperation of electrical cables constituted by a metal component (copper and/or aluminium) and by a plastic insulating component.

In known ways, the compact machine 1 of the invention comprises an inlet group 2, generally a blade grinder, for grinding lengths of electrical cables previously prepared and inserted in the loading mouth 20, either manually or using a belt supplied by a mincer (not illustrated), together with a terminal group 3 for final separation of fragments of metal and plastic material produced by the blade grinder 2.

The metal material is released by the blade grinder 2 in the form of fragments having substantially needle-shaped geometry.

Also comprised are electric ventilators (4, 40, 400) for pneumatic conveying of metal and plastic fragments from the blade grinder 2 to the terminal separator 3.

In a preferred embodiment, the machine 1 of the invention innovatively comprises a first intermediate group 7 located in cascade to the blade grinder 2.

The first intermediate group 7 is constituted by a labyrinth 71 internally of which pneumatic transit is enabled, i.e. the collection of metal fragments having a weight which is less than or more than a predetermined limit weight, such as to enable a first separation of the metal fragments.

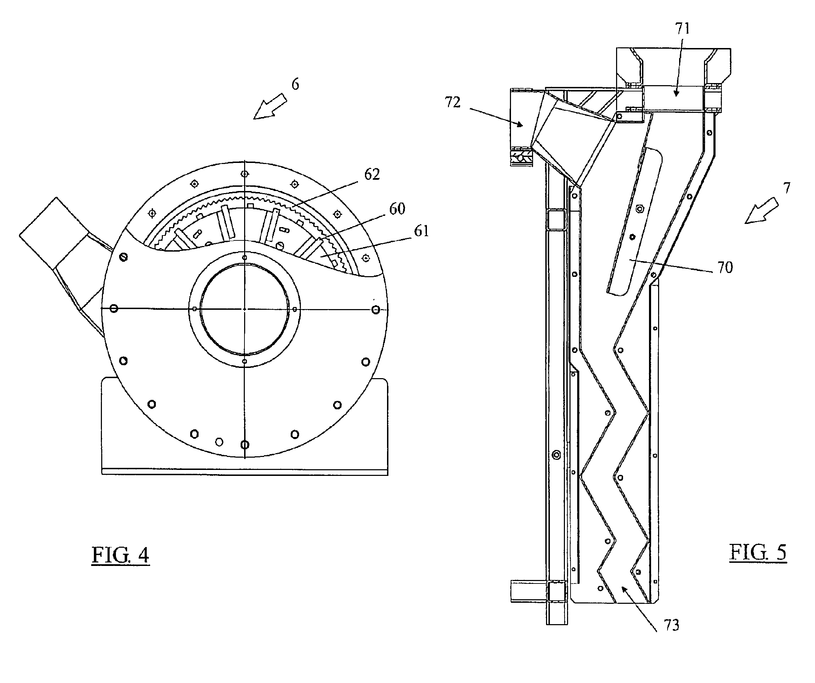

After the inlet section, the labyrinth 71 comprises a bifurcation from which two channels lead, a main channel 72 and a secondary channel 73 (figure 5).

The lighter metal fragments pass through the main channel 72; these fragments have a lower weight than the limit weight. The heavier metal fragments pass through the secondary channel 73; substantially these fragments have a greater weight than the limit weight.

In this case the plastic fragments transit together with the lighter metal fragments along the main channel 72 of the labyrinth 71.

Considering the above function of separation, and not of selection of the heavier metal fragments, it is however understood that any heavy fragments which flow through the main conduit 72 would in no case damage the functioning of the machine 1.

It is not known *a priori* which type and characteristics the electric cable to be treated have, but if rigid lengths of cable were fed into the grinder 2, the first intermediate group 7 would immediately be able to distinguish them and would send them into the secondary channel 73 of the labyrinth 71, as this wire would already be without a plastic cladding.

The first intermediate group 7 is advantageously provided with organs 70 for regulating the limit weight value; these discriminate in order to select metal fragments to send towards the main channel 72 or the secondary channel 73 of the labyrinth.

The regulating organs 70 are preferably constituted by a mobile separating wall positioned in proximity of the bifurcation of the labyrinth 71.

The terminal group 3, by way of example, can be of known type A2, i.e. it comprises an inclined separator table activated with a jolting motion, the upper surface of which is shaped as a bossed mesh having very fine links, subjected to an air flow.

The combined action of the air flow and the vibrations to which the table is subjected enable the rounded-geometry metal fragments (heavier) to rise, and the plastic fragments (lighter) to float.

In a further embodiment, in a novel way the machine 1 further comprises a second intermediate group 6, interposed between the first intermediate group 7 and a terminal group 3, able to centrifuge the metal products produced by the grinder 2 and release them with a substantially rounded geometry.

The second intermediate group 6 is preferably constituted by a plate grinder, internally of which the blades 60 of an impeller 61 cause the metal fragments to impact violently against specially-shaped peripheral plates 62 (figure 4).

The continual impacting to which the metal fragments are subjected during the centrifugal action lead to a modification on the geometric form from needle-shaped to rounded, while the plastic fragments remain substantially unaltered.

By appropriately sizing and shaping the blades 60 and the peripheral plates 62 of the plate grinder 6, metal fragments having a rounded toroidal geometry are advantageously released from the terminal group 3.

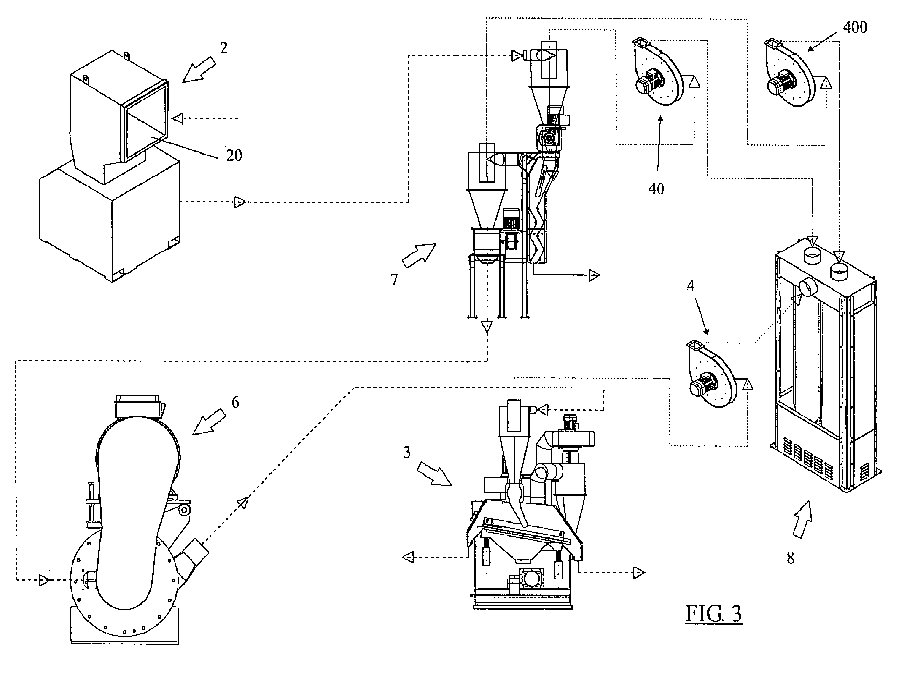

The second intermediate group 6, preferably interposed between the terminal group 3 and the first intermediate group 7 (figures 2, 3) can also be alternatively advantageously interposed between the first intermediate group 7 and the blade grinder 2.

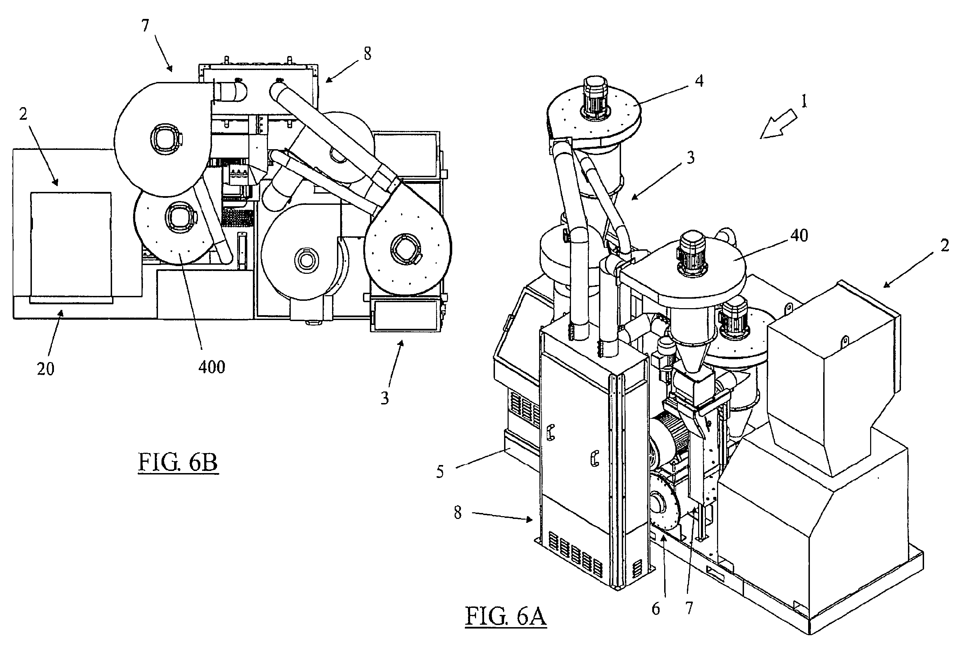

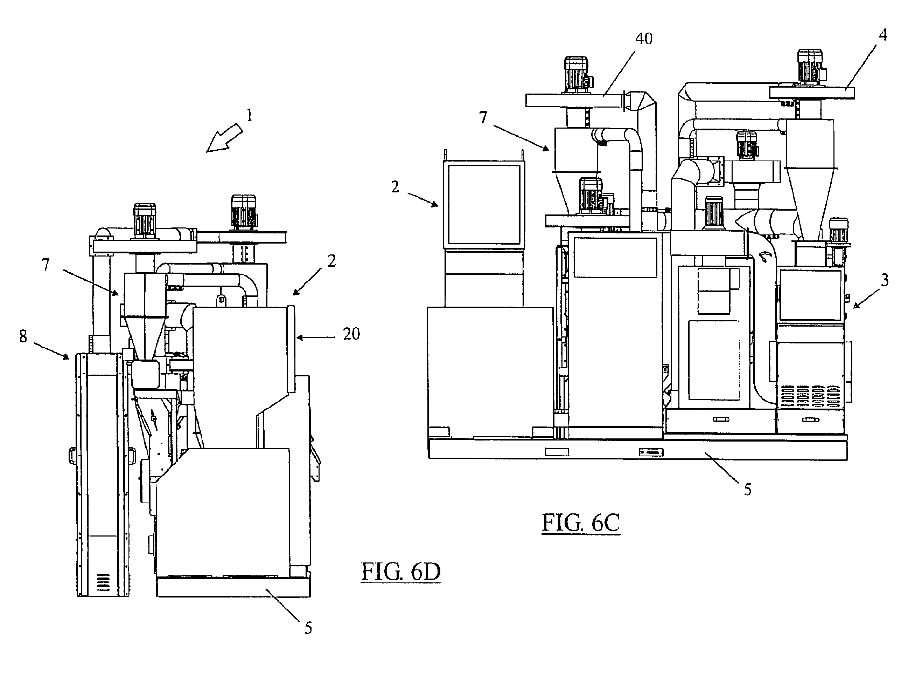

In order to guarantee maximum compactness of the machine 1, the blade grinder 2, the first intermediate group 7, the plate grinder 6 and the terminal separator 3 are supported by a same rest platform 5 (figure 6A).

By way of example, a first electric ventilator 4 is associated to the terminal separator 3, in order to enable conveying the fragments coming from the plate grinder 6, while a second electric ventilator 40 and a third electric ventilator 400 are associated to the first intermediate group 7, in order to enable conveying the fragments coming from the blade grinder 2 towards the labyrinth 71 and the main channel 72.

The proposed machine 1 can advantageously by provided with filter and recuperation organs 8 connected to the electric ventilators (4, 40, 400) such as to enable collection of the plastic and metal dusts produced in the various groups (2, 3, 6, 7) of the machine 1.

According to specification, refrigerating organs (not illustrated) can be provided, associated to the blade grinder 2, for controlling the temperature of the plastic and metal fragments products in the grinder 2.

The above description relates, by way of example, to the particular case of differentiated recuperation of electric cables, but the inventive concept can be extended to any type of industrial waste constituted by materials having specific weights that are sufficiently reciprocally different.

From the above, it is clear how the proposed compact machine for differentiated recuperation of industrial scrap, in particular comprising metal and plastic, is able to guarantee high separating efficiency and a top quality of final product to be recuperated.

The action exerted by the grinder enables sending metal fragments to the terminal separator, which metal fragments are no longer needle-shaped, like in machines of known type, but rounded, preferably rounded and toroidal.

The toroidal shape of the metal fragment enables considerable advantages to be obtained, such as preventing the formation of metal/plastic masses on the separating table, enabling an improved rising of the metal on the table, and also improving the separation of the metal fragments from the plastic fragments.

This provides a high quality level of final recuperated product, as well as leading to a large reduction in the stages of maintenance and cleanliness of the separating table, and therefore to a reduction in machine downtimes, all to the advantage of the overall productivity.

Productivity can be strongly increased thanks to the fact that grids with larger holes can be used with the grinders, with no particular problems.

With the aim of obtaining a high final product quality, the blade grinder can be provided with refrigerating organs for controlling the temperature assumed by the plastic and metal fragments produced therein, such as to enable a high level of homogeneity of the released product and a better performance of the terminal separator group.

The refrigerating action enables blade-grinder rotating regimes to be kept at acceptable levels without causing softening and/or fusion of the plastic fragments, which otherwise would soon obstruct the relative grid.

The invention has obviously been described, with the aid of the accompanying figures of the drawings, purely by way of non-limiting example, and it is therefore clear that all modifications and variants can be brought to it without its forsaking the ambit defined in the following claims.

## Claims

1. A compact machine for differentiated recuperation of industrial scrap, of a type comprising: an inlet group (2) for mincing lengths of industrial scrap comprising at least a plastic material and a metal material, the metal material being left in fragment form, the fragments being substantially needle-shaped; a terminal group (3) for final separation of fragments of metal and plastic material produced by the inlet group (2); means (4, 40, 400) for pneumatic conveying of the metal and plastic fragments from the inlet group (2) to the terminal group (3); **characterized in that** it comprises a first intermediate group (7), located cascadingly following the inlet group (2), which enables pneumatic transit or collection of metal fragments of a respectively lower weight or a greater weight than a predetermined limit weight, such as to enable a first separation of the metal fragments; the plastic fragments freely transiting together with metal fragments of the lower weight.

2. The machine of claim 1, **characterized in that** it comprises organs 70 for regulating the limit weight which are associated to the first intermediate group (7).

3. The machine of claim 1 or 2, **characterized in that** the first intermediate group (7) comprises a labyrinth (71) provided with a bifurcation from which two channels depart, being a main channel (72) and a secondary channel (73), for respectively conveying the metal fragments of the lower weight and the greater weight with respect to the limit weight; the plastic fragments transiting along the main channel (72).

4. The machine of one of claims from 1 to 3, **characterized in that** it comprises a second intermediate group (6), preferably located following on in cascade from the first intermediate group (7), which centrifuges the metal fragments produced by the inlet group (2) such that on release the metal fragments acquire a substantially rounded geometry, while leaving a geometry of the plastic fragments substantially unaltered.

5. The machine of claim 4, **characterized in that** the second intermediate group (6) releases metal fragments having a toroidal rounded geometry.

6. The machine of claim 4 or 5, **characterized in that** the second intermediate group (6) comprises an impeller (61) provided with a plurality of blades (60) which intercept the metal fragments and direct them towards peripheral plates (62) facing the impeller.

7. The machine of one of claims from 1 to 6, **characterized in that** it comprises filter and recuperation organs (8), cooperating with the means (4, 40, 400) for pneumatic conveying, destined to collect plastic and metal dust produced in the groups (2, 3, 6, 7).

8. The machine of one of claims from 1 to 7, **characterized in that** it comprises refrigerating organs, associated to the inlet group (2) for controlling a temperature of the plastic and metal fragments produced therein.

9. The machine of one of claims from 1 to 8, **characterized in that** it comprises a platform (5) for supporting at least the groups (2, 3, 6, 7).

## Patentansprüche

1. Kompakte Maschine für die differenzierte Rückgewinnung von Industrieabfällen, eines Typs, der Folgendes umfasst: eine Eingangsgruppe (2) zum Zerstückeln von Industrieschrott aus mindestens einem Kunststoff und einem metallischen Werkstoff, wodurch der metallische Werkstoff in Form von Stücken zurückbleibt, die im Wesentlichen nadelförmig sind; eine Endgruppe (3) zur Endtrennung der von der Eingangsgruppe (2) erzeugten Stücke aus Metall und Kunststoff; Mittel (4, 40, 400) zur pneumatischen Förderung der Metall- und Kunststoffstücke von der Eingangsgruppe (2) zur Endgruppe (3), **dadurch gekennzeichnet, dass** sie eine erste Zwischengruppe (7) umfasst, die sich in Hintereinanderschaltung an die Eingangsgruppe (2) anschließt und mittels Druckluft einen Weitertransport oder eine Sammlung von Metallstücken mit einem Gewicht, das niedriger bzw. höher als ein vorgegebenes Grenzgewicht ist, ermöglicht, derart, dass eine erste Absonderung von Metallstücken ermöglicht wird, während die Kunststoffstücke zusammen mit den Metallstücken niedrigeren Gewichts ungehindert weitertransportiert werden.

2. Maschine nach Anspruch 1, **dadurch gekennzeichnet, dass** sie Organe 70 zum Einstellen der Gewichtsgrenze umfasst, die der ersten Zwischengruppe (7) zugeordnet sind.

3. Maschine nach Anspruch 1 oder 2, **dadurch gekennzeichnet, dass** die erste Zwischengruppe (7) ein Labyrinth (71) umfasst, das mit einer Gabelung ausgestattet ist, von der zwei Kanäle ausgehen, nämlich ein Hauptkanal (72) und ein Nebenkanal (73), um die Metallstücke mit dem niedrigeren Gewicht bzw. dem höheren Gewicht in Bezug auf das Grenzgewicht zu befördern, wobei die Kunststoffstücke durch den Hauptkanal (72) transportiert werden.

4. Maschine nach einem der Ansprüche 1 bis 3, **dadurch gekennzeichnet, dass** sie eine zweite Zwischengruppe (6) umfasst, die sich vorzugsweise in Hintereinanderschaltung an die erste Zwischengruppe (7) anschließt und die von der Eingangsgruppe (2) erzeugten Metallstücke schleudert, sodass die Metallstücke bei ihrer Abgabe eine im Wesentlichen abgerundete Geometrie aufweisen, während die Geometrie der Kunststoffstücke im Wesentlichen unverändert gelassen wird.

5. Maschine nach Anspruch 4, **dadurch gekennzeichnet, dass** die zweite Zwischengruppe (6) Metallstücke mit einer torusförmig abgerundeten Geometrie abgibt.

6. Maschine nach Anspruch 4 oder 5, **dadurch gekennzeichnet, dass** die zweite Zwischengruppe (6) ein Laufrad (61) aufweist, das mit einer Vielzahl von Radschaufeln (60) versehen ist, welche die Metallstücke abfangen und sie zu peripheren Platten (62) lenken, die dem Laufrad gegenüberliegen.

7. Maschine nach einem der Ansprüche 1 bis 6, **dadurch gekennzeichnet, dass** sie Filter- und Rückgewinnungsorgane (8) umfasst, die mit den Mitteln (4, 40, 400) zur pneumatischen Förderung zusammenwirken und dafür bestimmt sind, den in den Gruppen (2, 3, 6, 7) erzeugten Kunststoff- und Metallstaub abzufangen.

8. Maschine nach einem der Ansprüche 1 bis 7, **dadurch gekennzeichnet, dass** sie Kühlorgane umfasst, die der Eingangsgruppe (2) zugeordnet sind, um die Temperatur der darin erzeugten Kunststoff- und Metallstücke zu regeln.

9. Maschine nach einem der Ansprüche 1 bis 8, **dadurch gekennzeichnet, dass** sie einen Unterbau (5) umfasst, der mindestens die Gruppen (2, 3, 6, 7) trägt.

## Revendications

1. Une machine compacte pour la récupération différenciée de déchets industriels, d'un type comprenant: un groupe d'entrée (2) pour le broyage de morceaux de déchets industriels comprenant au moins un matériau plastique et un matériau métallique, le matériau métallique étant laissé sous forme de fragments, ces fragments ayant essentiellement la forme d'aiguilles ; un groupe terminal (3) pour la séparation finale des fragments de matériau métallique et plastique produits par le groupe d'entrée (2) ; des moyens (4, 40, 400) pour le transport pneumatique des fragments métalliques et plastiques du groupe d'entrée (2) au groupe terminal (3); **caractérisée en ce qu'**elle comprend un premier groupe intermédiaire (7), situé en cascade après le groupe d'entrée (2), qui permet le transit pneumatique ou la collecte de fragments métalliques ayant respectivement un poids inférieur ou un poids supérieur à un poids limite prédéfini, de manière à permettre une première séparation des fragments métalliques; les fragments plastiques transitant librement avec les fragments métalliques de poids inférieur.

2. La machine selon la revendication 1, **caractérisée en ce qu'**elle comprend des organes 70 de régulation du poids limite, qui sont associés au premier groupe intermédiaire (7).

3. La machine selon la revendication 1 ou 2, **caractérisée en ce que** le premier groupe intermédiaire (7) comprend un labyrinthe (71) pourvu d'une bifurcation d'où partent deux canaux, à savoir un canal principal (72) et un canal secondaire (73), pour transporter respectivement les fragments métalliques de poids inférieur et de poids supérieur par rapport au poids limite ; les fragments plastiques transitant le long du canal principal (72).

4. La machine selon une des revendications de 1 à 3, **caractérisée en ce qu'**elle comprend un deuxième groupe intermédiaire (6), de préférence situé en cascade après le premier groupe intermédiaire (7), qui centrifuge les fragments métalliques produits par le groupe d'entrée (2) de manière à ce que les fragments métalliques relâchés aient une géométrie essentiellement arrondie, tout en laissant essentiellement inchangée la géométrie des fragments plastiques.

5. La machine selon la revendication 4, **caractérisée en ce que** le deuxième groupe intermédiaire (6) relâche des fragments métalliques ayant une géométrie arrondie toroïdale.

6. La machine selon la revendication 4 ou 5, **caractérisée en ce que** le deuxième groupe intermédiaire (6) comprend une roue (61) pourvue d'une pluralité de pales (60) qui interceptent les fragments métalliques et les dirigent vers des plaques périphériques (62) qui font face à la roue.

7. La machine selon une des revendications de 1 à 6, **caractérisée en ce qu'**elle comprend des organes de filtrage et de récupération (8), coopérant avec les moyens (4, 40, 400) de transport pneumatique, destinés à collecter les poussières plastiques et métalliques produites dans les groupes (2, 3, 6, 7).

8. La machine selon une des revendications de 1 à 7, **caractérisée en ce qu'**elle comprend des organes de réfrigération, associés au groupe d'entrée (2), pour contrôler une température des fragments plastiques et métalliques qui y sont produits.

9. La machine selon une des revendications de 1 à 8, **caractérisée en ce qu'**elle comprend une plateforme (5) pour supporter au moins les groupes (2, 3, 6, 7).
